# EUROPÄISCHE PATENTSCHRIFT

(11) **EP 0 875 492 B1**
(45) Veröffentlichungstag und Bekanntmachung des Hinweises auf die Patenterteilung: **11.12.2002**
(21) Anmeldenummer: 98104773.1
(22) Anmeldetag: 17.03.1998
(51) Int. Cl.: C04B 12/04, C04B 28/26, E06B 3/26, B28B 19/00, B28B 1/14

(54) **Längliches Brandschutzmaterial**
Elongate fire-proof material
Matériau ignifuge de forme allongée

(30) Priorität: 27.03.1997 DE 19713156
(43) Veröffentlichungstag der Anmeldung: 04.11.1998
(73) Patentinhaber: BASF AKTIENGESELLSCHAFT, 67056 Ludwigshafen (DE)
(72) Erfinder: Maier, Harry, 67373 Dudenhofen (DE)

(56) Entgegenhaltungen:
- EP-A- 0 004 882
- CH-A- 448 864
- DE-A- 2 725 779
- DE-A- 3 217 260
- DE-A- 3 512 588
- GB-A- 933 410
- US-A- 4 824 807

## Beschreibung

Die Erfindung betrifft ein Brandschutzmaterial auf Basis von wasserhaltigem Natriumsilikat, welches mit einer Schutzschicht versehen ist, sowie ein Verfahren zu seiner Herstellung.

Brandschutzmaterialien aus wasserhaltigen Alkalimetallsilikaten sind seit langem bekannt und werden bereits vielfältig für den vorbeugenden Brandschutz eingesetzt. Sie bewirken bei hohen Temperaturen, wie sie z.B. im Brandfall auftreten, durch Schaumbildung, Volumenvergrößerung und Ausbildung eines Blähdrucks eine hervorragende Isolierung gegen Feuer und Rauch, und führen so eine Abdichtung von Öffnungen und Durchgängen in Baukörpern herbei. Derartige Materialien sowie Verfahren zu ihrer Herstellung sind z.B. in den DE-B 11 69 832 und 11 76 546 beschrieben. In der genannten Druckschrift wird empfohlen, die Brandschutzplatten gegen das Verdunsten des Wassers durch Kunststoff-Folien, z.B. Polyethylenüberzüge zu schützen. Diese sind jedoch meist für Kohlendioxid durchlässig, welches durch chemische Reaktion die Wirksamkeit des wasserhaltigen Natriumsilikats mindert. Nach DE-A 16 21 799 sollen deshalb festhaftende Überzüge aus Epoxidharz/Härter-Gemischen auf die Brandschutzplatten aufgebracht werden. Epoxidharze sind jedoch teuer und bei der Applikation müssen aufwendige Sicherheitsvorkehrungen getroffen werden.

In der CH-A 448 864 ist ein Verfahren zur Herstellung von Brandschutzplatten gemäß dem Oberbegriff des Anspruchs 1 beschrieben, bei dem man eine Suspension aus Alkalisilikatpartikeln und Fasern in einer Alkalisilikatlösung auf einer Unterlage erwärmt und dadurch verfestigt, von der Unterlage abnimmt und die entstandenen Platten nachtrocknet. Diese Platten können mit filmbildenden Materialien lackiert oder mit Folien umkleidet werden, welche den Zutritt von Wasser und Kohlendioxid zu der Brandschutzmasse verhindern sollen.

Handelsübliche Brandschutzmaterialien, z.B. PALUSOL® der BASF, werden in Form von großflächigen Platten hergestellt, die getrocknet und mit einer Epoxidharz-Schutzschicht versehen werden. Sie werden vom Verarbeiter in Streifen geschnitten, die dann noch mit einer Umhüllung, z.B. aus einer Aluminium-, PVC- oder PET-Folie versehen werden. Dies ist alles recht aufwendig.

In der DE-A 27 03 022 ist ein Verfahren zur direkten Herstellung von Brandschutzstreifen beschrieben, bei dem man Papierstreifen mit einer Wasserglassuspension beschichtet, das Wasserglas durch Wärmebehandlung geliert, mehrere Lagen des beschichteten Materials zusammenführt und miteinander verpreßt und den Schichtstoff schließlich mit Lacküberzügen versieht oder mit Folien umhüllt. Auch dieses Verfahren ist noch recht kompliziert und hat sich deshalb nicht durchgesetzt.

In DE-U-9310267 ist ein aufschäumbares Brandschutzlaminat beschrieben, welches eine aufwendige beidseitige Beschichtung aufweist, die aus mehreren Schichten Papier, Kunststoff und Aluminium besteht.

Der Erfindung lag nun die Aufgabe zugrunde, ein einfaches Verfahren zum Umhüllen von Brandschutzmaterialien mit einer Schutzschicht zu entwickeln, die einen ausreichenden Schutz gegen mechanische Beschädigung, gegen die Einwirkung von Kohlendioxid sowie gegen das Verdunsten von Wasser darstellt.

Gegenstand der Erfindung gemäß dem Anspruch 1 ist ein Verfahren zur Herstellung eines länglichen, ungeschäumten Brandschutzmaterials auf Basis von wasserhaltigem Natriumsilikat, welches von einer Schutzschicht umhüllt ist. Dabei mischt man eine Wasserglaslösung mit Wasserglaspulver und gegebenenfalls Glasfasern, füllt die flüssige Mischung in ein längliches Profil mit steifen Wänden, verschließt das Profil dicht und läßt die Mischung gelieren.

Man geht aus von handelsüblicher Wasserglaslösung mit einem Wassergehalt von etwa 65 Gew.-% und vermischt diese mit handelsüblichem Wasserglaspulver mit einem Wassergehalt von etwa 18 Gew.-%. Das Mischungsverhältnis richtet sich nach der angestrebten Gelierzeit: Je höher die zugesetzte Menge an Pulver ist, desto schneller geliert die Mischung. Der Wassergehalt der Mischung kann dabei zwischen 20 und 60 Gew.-% schwanken, bevorzugt ist ein Wassergehalt zwischen 40 und 50 Gew.-%. Durch diese Variation lassen sich Gelierzeiten zwischen 0,5 und 5 Stunden gezielt einstellen. In manchen Fällen kann es zweckmäßig sein, die Brandschutzmaterialien durch Zumischen von Glasfasern in Mengen von 2 bis 20 Gew.-%, bezogen auf die Mischung, zu verstärken.

Die flüssige Mischung wird erfindungsgemäß in ein längliches Profil mit steifen Wänden eingefüllt. Dabei ist ein Rechteckprofil bevorzugt, es sind aber auch runde oder ovale Profile denkbar. Grundsätzlich kann man die flüssige Mischung auch in vorgefertigte Hohlräume der zu schützenden Baukörper, z.B. am Rand von Türblättern oder Zargen einfüllen. Man kann die flüssige Mischung vorsichtig in das Hohlprofil einlaufen lassen, bevorzugt wird es aber durch Lanzen, die man von unten nach oben langsam zurückzieht, eingeführt.

Bevorzugte Wandmaterialien sind Kunststoff, wie z.B. Polyvinylchlorid, Polyethylen oder Polyester. Aber auch Metalle, wie Aluminiumblech sind geeignet. Die Wände der Profile sollen so dick sein, daß das Brandschutzmaterial steif ist, aber im Brandfall durch den Blähdruck des sich bildenden Wasserdampfes die Hülle sprengen kann. Gegebenenfalls können die Wände auch mit Sollbruchstellen versehen sein. Die Wanddicke kann in weiten Grenzen zwischen 0,05 und 2 mm schwanken. Im Fall von Kunststoffhüllen beträgt die bevorzugte Wanddicke 0,3 bis 1,0 mm.

Das Gelieren der flüssigen Mischung in dem Hohlprofil geht bei Raumtemperatur vor sich. Es kann durch leichtes Erwärmen auf Temperaturen bis zu 80°C beschleunigt werden.

Das erfindungsgemäße Brandschutzmaterial liegt bevorzugt in Form von Streifen vor, die - inclusive Hülle - 5 bis 100 mm, insbesondere 20 bis 50 mm breit und 1 bis 20 mm, insbesondere 2 bis 5 mm dick sind.

Gegenstand der Erfindung gemäß dem Anspruch 5 ist ein Brandschutzstreifen auf Basis von ungeschäumten, wasserhaltigem Natriumsilikat, der ausschließlich von einem Rechteckprofil mit steifen Wänden aus Kunststoff oder Metall allseitig umhüllt ist. In diesem Zusammenhang bedeutet "ausschließlich", daß das Brandschutzmaterial keine Beschichtung aus Epoxidharzen oder anderen Schutzlacken aufweist und keine flexiblen Hüllen aus Papier, Kunststoff-Folien oder Aluminiumfolien enthält.

## Patentansprüche

1. Verfahren zur Herstellung eines länglichen, ungeschäumten Brandschutzmaterials auf Basis von wasserhaltigem Natriumsilikat, welches von einer Schutzschicht umhüllt ist, wobei man eine Wasserglaslösung mit Wasserglaspulver und gegebenenfalls Glasfasern mischt und die Mischung gelieren läßt, **dadurch gekennzeichnet, daß** man die flüssige Mischung vor dem Gelieren in ein längliches Profil mit steifen Wänden einfüllt und das Profil dicht verschließt.

2. Verfahren nach Anspruch 1, **dadurch gekennzeichnet, daß** die flüssige Mischung zunächst eine Viskosität von 0,1 bis 100 Pa·s aufweist und nach 0,5 bis 5 Stunden geliert ist.

3. Verfahren zur Herstellung eines streifenförmigen Brandschutzmaterials nach Anspruch 1, **dadurch gekennzeichnet, daß** man die flüssige Mischung in ein Rechteckprofil, das 5 bis 100 mm breit und 1 bis 10 mm dick ist, einfüllt.

4. Verfahren nach Anspruch 3, **dadurch gekennzeichnet, daß** die Wände des Rechteckprofils aus Kunststoff oder einem Metall bestehen.

5. Brandschutzstreifen auf Basis von ungeschäumten wasserhaltigem Natriumsilikat, welcher ausschließlich von einem Rechteckprofil einer Breite von 5 bis 100 mm und einer Dicke von 1 bis 10 mm mit steifen Wänden aus Kunststoff oder Metall allseitig umhüllt ist.

## Claims

1. A process for preparing an elongate unfoamed fire protection material based on water-containing sodium silicate coated with a protective layer by mixing a waterglass solution with waterglass powder and optionally glass fibers and allowing the mixture to gel, **characterized in that** prior to gelling the liquid mixture is filled into an elongate profile having stiff walls and the profile is tightly sealed.

2. A process as claimed in claim 1, **characterized in that** the liquid mixture initially has a viscosity of from 0.1 to 100 Pa·s and has gelled after from 0.5 to 5 hours.

3. A process as claimed in claim 1 for producing a strip-shaped fire protection material, **characterized in that** the liquid mixture is filled into a rectangular profile from 5 to 100 mm in width and from 1 to 10 mm in thickness.

4. A process as claimed in claim 3, **characterized in that** the walls of the rectangular profile are composed of plastic or a metal.

5. A fire protection strip based on unfoamed water-containing sodium silicate and surrounded on all sides exclusively by a rectangular profile from 5 to 100 mm in width and from 1 to 10 mm in thickness having stiff walls composed of plastic or metal.

## Revendications

1. Procédé de préparation d'un matériau ignifuge non expansé, de forme allongée, à base de silicate de sodium contenant de l'eau, qui est enveloppé d'une couche de protection, dans lequel on mélange une solution de verre soluble avec une poudre de verre soluble et éventuellement des fibres de verre et on laisse le mélange gélifier, **caractérisé en ce que**, avant la gélification, on charge le mélange fluide dans un profilé allongé à parois rigides et on ferme le profilé de manière étanche.

2. Procédé suivant la revendication 1, **caractérisé en ce que** le mélange fluide présente tout d'abord une viscosité de 0,1 à 100 Pa·s et est gélifié après 0,5 à 5 heures.

3. Procédé de préparation d'un matériau ignifuge en forme de bande suivant la revendication 1, **caractérisé en ce qu'**on charge le mélange fluide dans un profilé rectangulaire qui a une largeur de 5 à 100 mm et une épaisseur de 1 à 10 mm.

4. Procédé suivant la revendication 3, **caractérisé en ce que** les parois du profilé rectangulaire sont constituées d'une matière synthétique ou d'un métal.

5. Bandes ignifuges à base de silicate de sodium contenant de l'eau, non expansé, qui est enveloppé de tous côtés exclusivement par un profilé rectangulaire d'une largeur de 5 à 100 mm et d'une épaisseur de 1 à 10 mm et à parois rigides en matière synthétique ou en métal.
